# EUROPEAN PATENT APPLICATION

(11) **EP 4 623 884 A2**
(43) Date of publication of application: **01.10.2025**
(21) Application number: 25190727.5
(22) Date of filing: 27.09.2020
(51) Int. Cl.: A61H 1/00

(54) **RATE MONITOR FOR PORTABLE MEDICAL TRAINING DEVICE**

(30) Priority: 27.09.2019 US 201962907184 P
(62) Divisional of application: 20868877.0
(71) Applicant: Prestan Products LLC, Mayfield Village, OH 44143 (US)
(72) Inventor: CHARLTON, Christopher, M., Mayfield Village, OH, 44143 (US); COOK, Mark E., Mayfield Village, OH, 44143 (US); LINT, Timothy E., Mayfield Village, OH, 44143 (US)
(74) Representative: Kuhnen & Wacker Patent- und Rechtsanwaltsbüro PartG mbB

(57) **Abstract**

A CPR training manikin. The training manikin can have a lighted rate monitor assembly. The lighted rate monitor can include a body portion, the body portion including an electronic control board. A chest compression assembly can be joined to the body portion, the chest compression assembly comprising input sensors electrically connected to the electronic control board. The lighted rate monitor assembly can have an electrical cord assembly having a plug member at a proximal end for removable electrical connection with the electronic control board, and having at a distal end, a light.

## Description

### CROSS-REFERENCE TO RELATED APPLICATIONS

This application claims the benefit of U.S. Provisional Patent Application Serial No. 62/907,184, filed on September 27, 2019, the disclosure of which is hereby incorporated herein by reference in its entirety.

### TECHNICAL FIELD

The present application is directed to a rate monitor for a portable medical training device, and more particularly to a rate monitor assembly for attachment to a portable medical training manikin for teaching cardiopulmonary resuscitation.

### BACKGROUND

Numerous solutions have been offered in the past to provide an inexpensive medical training manikin which can be used in a cardiopulmonary resuscitation ("CPR") training environment for a group of trainees. It is desired that such medical training manikins are lightweight for easy transportation to the training site, as well as stackable for compact packing and carrying, capable of simple and quick assembly, readily able to be cleaned or otherwise maintained in a sanitary condition, easy to use, and capable of substantially simulating the functions and responses of a human patient. Additionally, it is desired that a quality product be provided, which is not only lightweight, but of a realistic and durable material which would result in a longer product life.

In January, 2019, the American Heart Association began to include the use of CPR feedback technology as an additional standard in their CPR training guidelines. The use of CPR feedback devices was desired in order to improve student chest compression rate, depth of compressions and hand position - components which are vital to quality performance of CPR. As a result, improvements were desired to provide an effective, low cost CPR feedback mechanism with portable cardiopulmonary resuscitation manikin training devices.

### BRIEF DESCRIPTION OF THE DRAWINGS

FIG. 1 is a perspective view showing a portion of the lighted rate monitor assembly provided through an opening in a CPR training manikin.
FIG. 2 is a top end view of the CPR training manikin shown in FIG. 1.
FIG. 3 is a top view of the CPR training manikin shown in FIG. 1.
FIG. 4 is a right side view of the CPR training manikin shown in FIG. 1.
FIG. 5 is a bottom view of the CPR training manikin shown in FIG. 1.
FIG. 6 is perspective view of the lighted rate monitor assembly shown in the environment of a CPR training manikin.
FIG. 7 is a cutaway perspective view of a lighted rate monitor assembly shown in FIG. 6, and shown engaged with a CPR training manikin.
FIG. 8 is a cutaway side view of the lighted rate monitor assembly and CPR training manikin in Fig. 7.
FIG. 9 is an enlarged cutaway right side view of the lighted rate monitor assembly shown in FIG. 8.
FIG. 10 is a view of the lighted rate monitor assembly shown in FIG. 9.
FIG. 11 is a perspective view showing a portion of a lighted rate monitor assembly provided through an opening in a CPR training manikin torso, where the outer skin and head assembly are removed.
FIG. 12 is a top end view of the CPR training manikin torso shown in FIG. 11.
FIG. 13 is a top view of the CPR training manikin torso shown in FIG. 11.
FIG. 14 is a right side view of the lighted rate monitor assembly shown in FIG. 11.
FIG. 15 is a bottom view of the lighted rate monitor assembly shown in FIG. 11.
FIG. 16 is an exploded perspective view of a portion of a lighted rate monitor assembly during a first step of manufacture.
FIG. 17 is an exploded perspective view of a portion of a lighted rate monitor assembly during a second step of manufacture.
FIG. 18 is an exploded perspective view of a portion of a lighted rate monitor assembly during a third step of manufacture.
FIG. 19 is an exploded perspective view of a portion of a lighted rate monitor assembly during a fourth step of manufacture.
FIG. 20 is a perspective view of a completed lighted rate monitor assembly without a cord assembly.
FIG. 21 is a bill of materials showing the numbered part descriptions identified in FIGS. 16 to 20.
FIG. 22 is a top view of a cord assembly of a lighted rate monitor assembly.
FIG. 23 is a right end view of the cord assembly of Fig. 22.
FIG. 24 is a right side view of a cord assembly of a lighted rate monitor assembly of FIG. 22.
FIG. 25 is a left end view of the cord assembly of Fig. 22.
FIG. 26 is a center cutaway right side view of the cord assembly of Fig. 22.
FIG. 27 is a bottom view of the cord assembly of the lighted rate monitor assembly of FIG. 22.
FIG. 28 is an exploded view of the cord assembly of FIGS. 22 to 27.
FIG. 29 is a top perspective view of a lighted rate monitor assembly with the cord assembly positioned prior to engagement with the lighted rate monitor assembly.
FIG. 30 is a top view of the lighted rate monitor assembly of FIG. 29.
FIG. 31 is a left side view of the lighted rate monitor assembly of FIG. 30.
FIG. 32 is a bottom end view of the lighted rate monitor assembly of FIG. 30.
FIG. 33 is a right side view of the lighted rate monitor assembly of FIG. 30.
FIG. 34 is a top perspective view of a light rate monitor assembly with the cord assembly engaged with the monitor assembly.
FIG. 35 is a top view of the lighted rate monitor assembly of FIG. 34.
FIG. 36 is a left side view of the lighted rate monitor assembly of FIG. 34.
FIG. 37 is a bottom view of the lighted rate monitor assembly of FIG. 34.
FIG. 38 is a right side view of the lighted rate monitor assembly of FIG. 34.
FIG. 39 is a schematic showing an example embodiment of electronic components and operations of a lighted rate monitor assembly.

### DETAILED DESCRIPTION

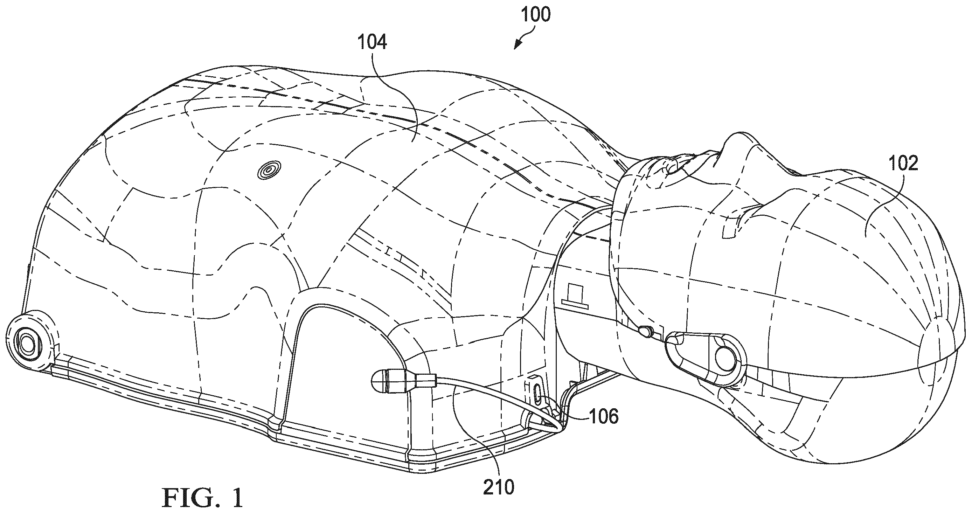

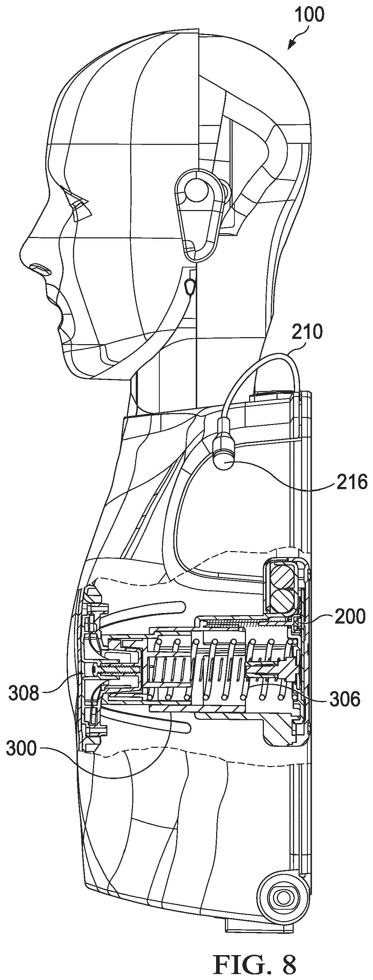

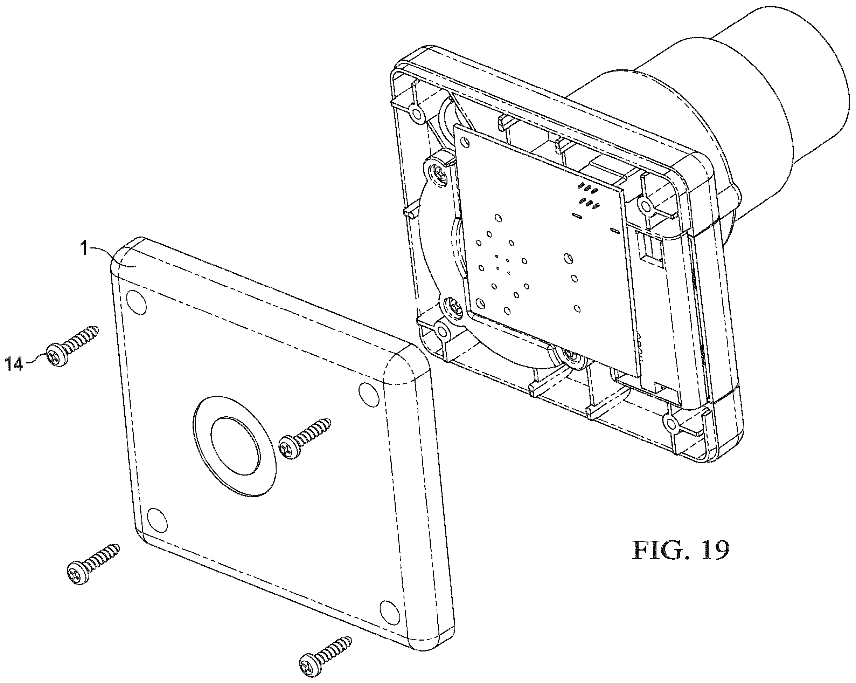

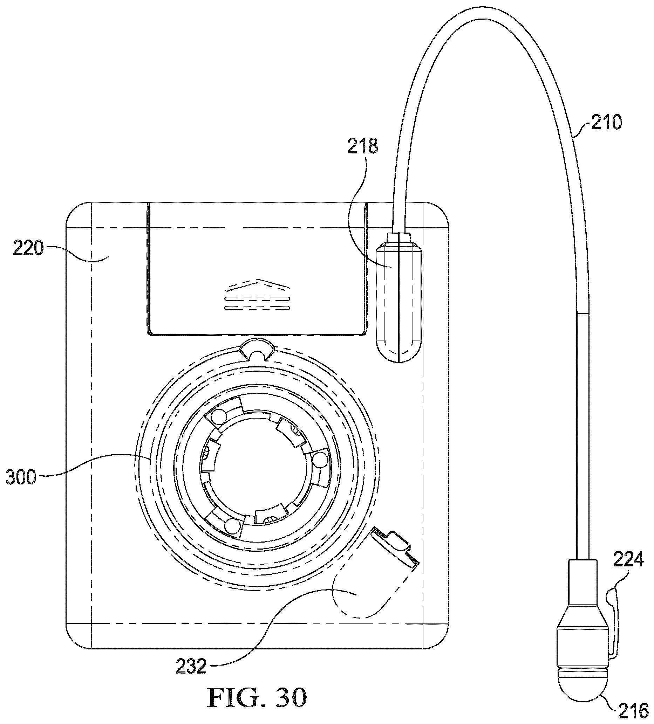

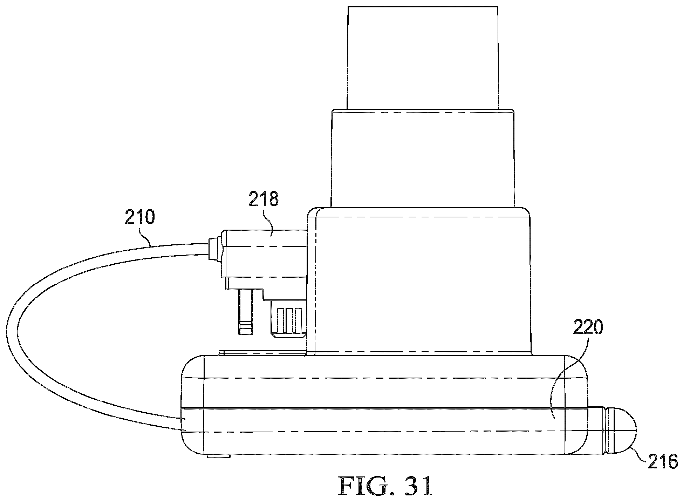

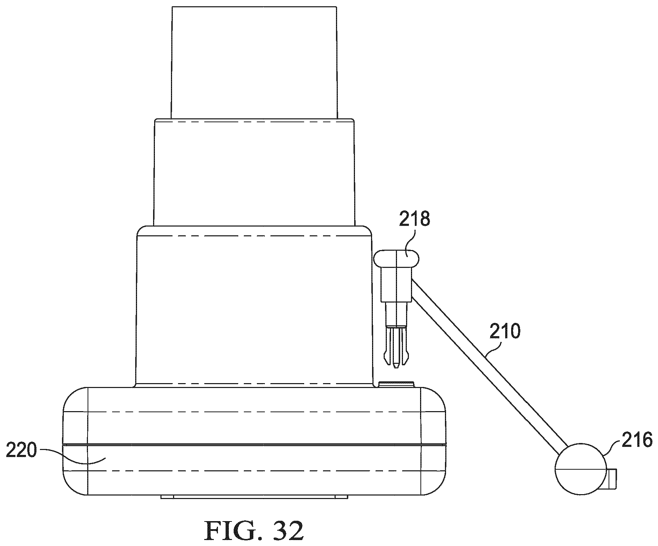

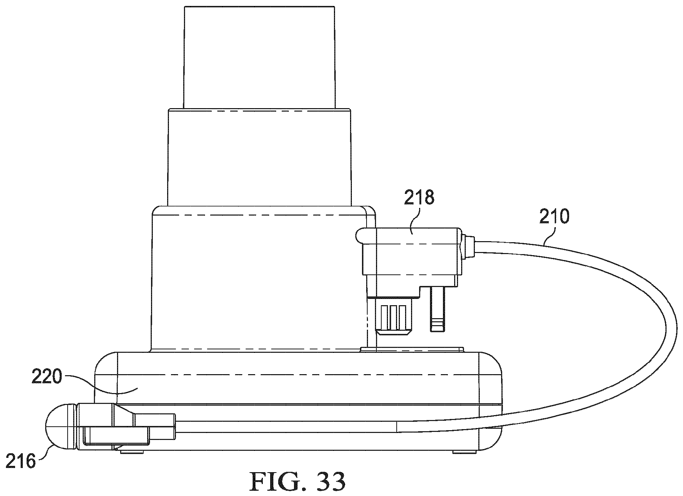

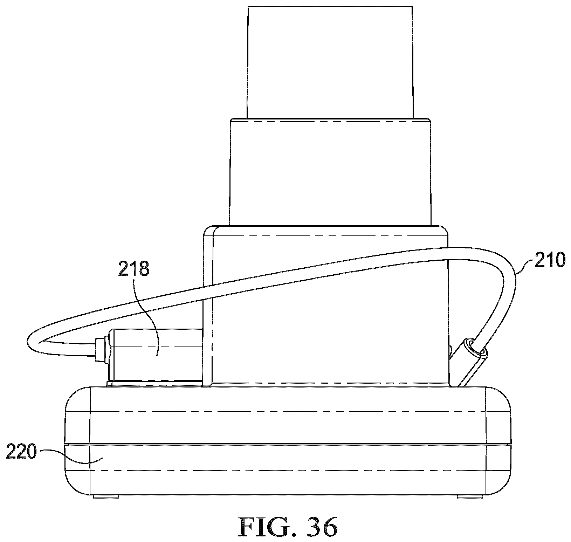

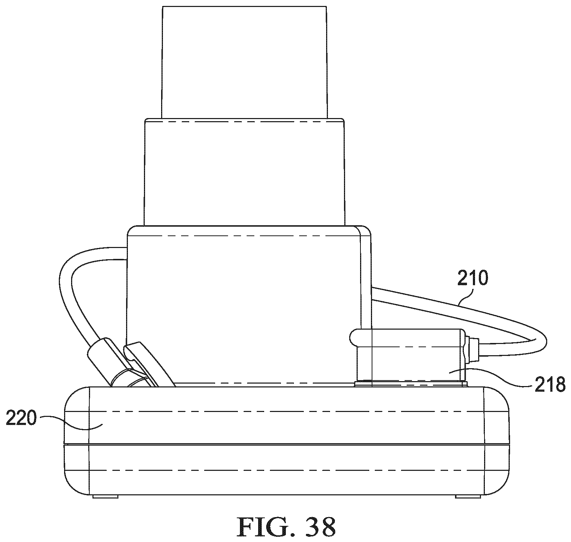

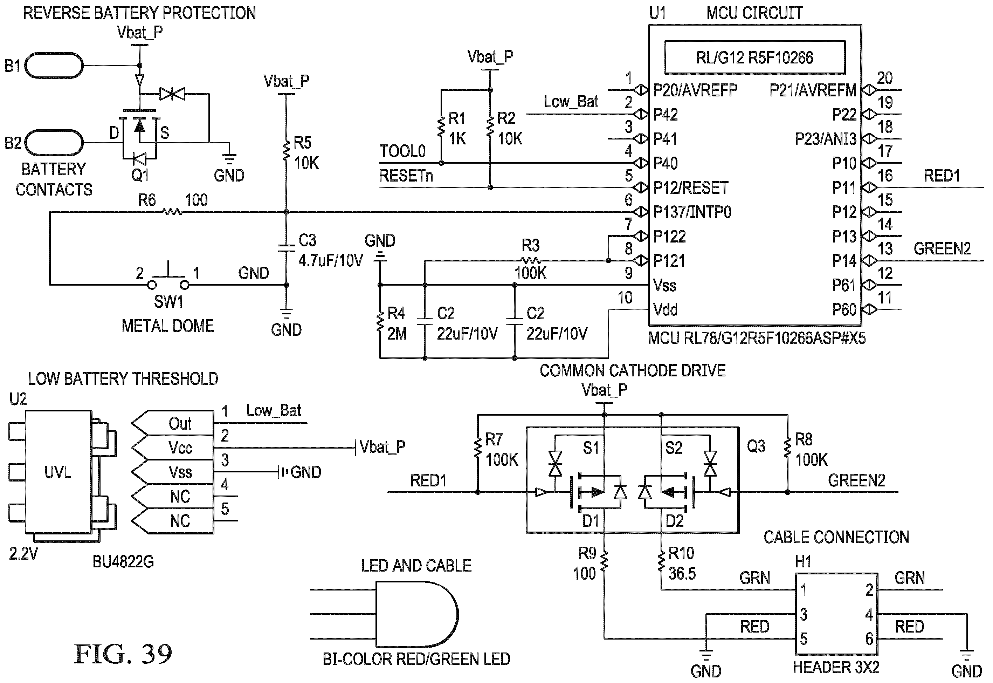

Certain embodiments are hereinafter described in detail in connection with the views and examples of FIGS. 1-39.

Various non-limiting embodiments of the present disclosure will now be described to provide an overall understanding of the principles of the structure, function, and use of the apparatuses, systems, methods, and processes disclosed herein. One or more examples of these non-limiting embodiments are illustrated in the accompanying drawings. Those of ordinary skill in the art will understand that systems and methods specifically described herein and illustrated in the accompanying drawings are non-limiting embodiments. The features illustrated or described in connection with one non-limiting embodiment may be combined with the features of other non-limiting embodiments. Such modifications and variations are intended to be included within the scope of the present disclosure.

Reference throughout the specification to "various embodiments," "some embodiments," "one embodiment," "some example embodiments," "one example embodiment," or "an embodiment" means that a particular feature, structure, or characteristic described in connection with any embodiment is included in at least one embodiment. Thus, appearances of the phrases "in various embodiments," "in some embodiments," "in one embodiment," "some example embodiments," "one example embodiment, or "in an embodiment" in places throughout the specification are not necessarily all referring to the same embodiment. Furthermore, the particular features, structures or characteristics may be combined in any suitable manner in one or more embodiments.

The examples discussed herein are examples only and are provided to assist in the explanation of the apparatuses, devices, systems and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. Any failure to specifically describe a combination or sub-combination of components should not be understood as an indication that any combination or sub-combination is not possible. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Technical solutions to the problems associated with performing proper CPR can be achieved by the systems, apparatuses and methods of the present disclosure. In general, the systems, apparatuses and methods provide a simple and clear, relatively low cost solution to the problem of training students in proper CPR chest compressions. Certain exemplary embodiments of the present disclosure are provided herein.

Referring now to FIG. 1, there is shown an exemplary embodiment of an apparatus, method and system for training manikin users in proper CPR chest compressions. A CPR training manikin 100 is provided. The CPR training manikin 100 can have a size and shape of the torso area of a human, including a head 102 and a chest 104 area. The head and chest area can be operatively configured to generally mimic a human head 102, chest 104, respiratory and cardiopulmonary morphology. In general, the CPR training manikin 100 can comprise multiple external and internal components, and can have an outer surface that has the look, feel, and shape of the skin of a human. The CPR training manikin 100 can include relevant anatomical landmarks, including the sternum, rib cage, sternal notch, and the xyphoid process. The manikin can be vinyl and latex free, being made of relatively durable, lightweight materials. The manikin can have a clamshell opening configuration (as shown below) for easy access to internal components. An example of a manikin that can be improved by the apparatuses, systems, and methods of the present disclosure is the PRESTAN ULTRALITE^{®} Manikin available from MCR Medical Supply Inc.

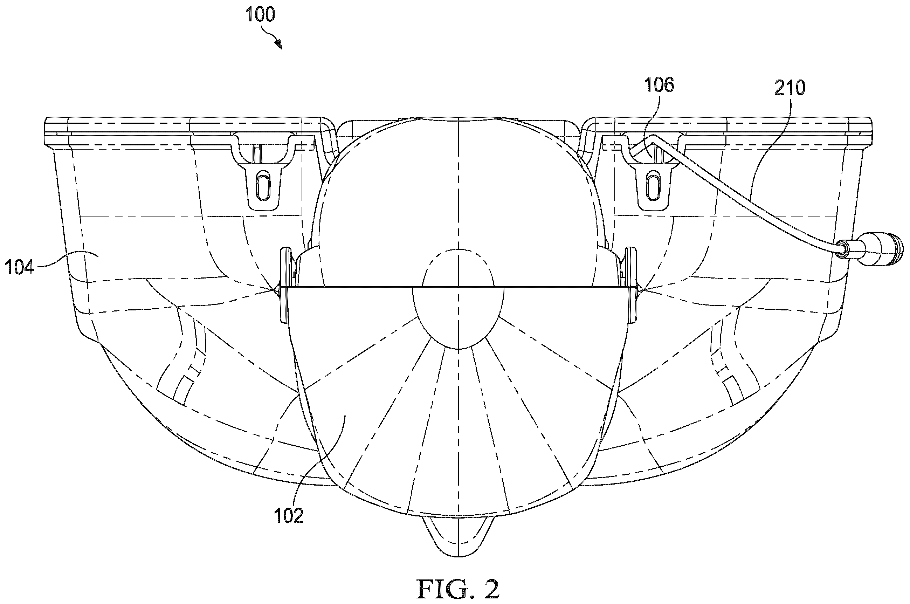

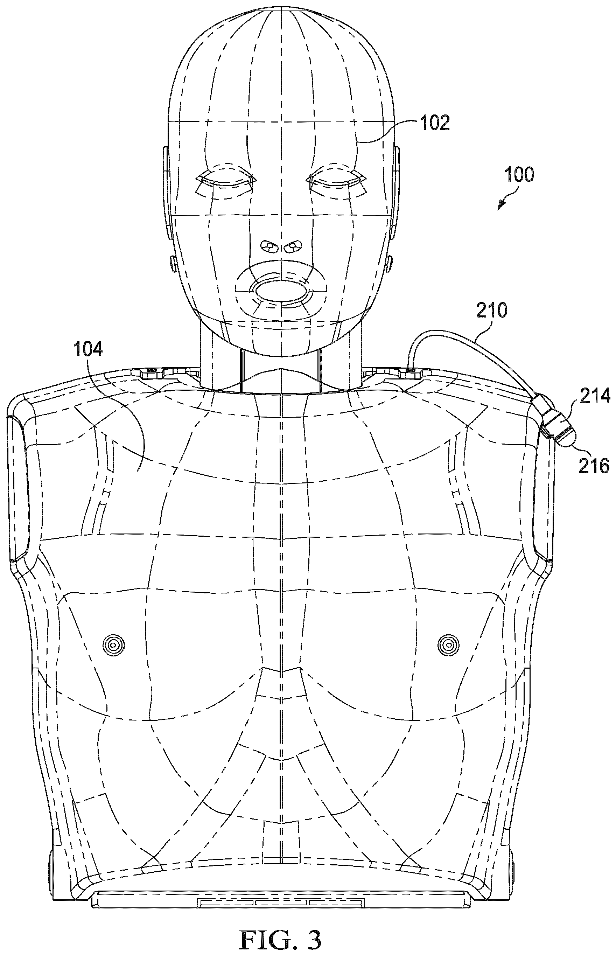

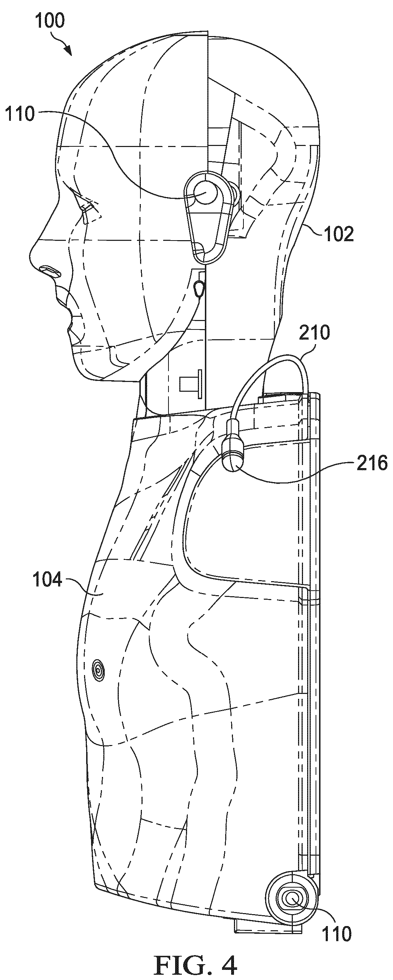

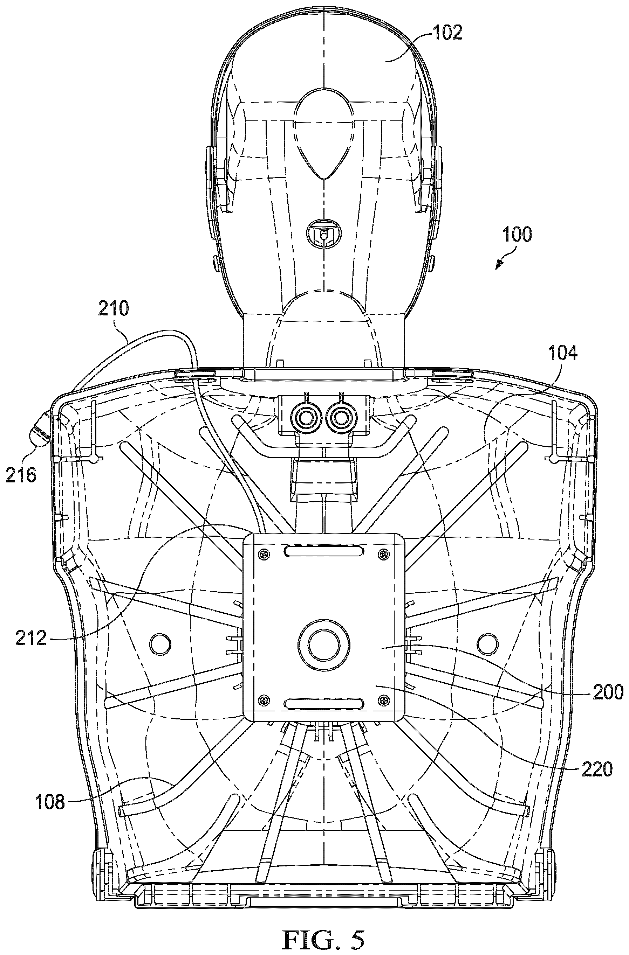

The CPR training manikin 100 has a lighted rate monitor assembly 200, a portion of which, namely a cord assembly 210, can extend from the interior of the CPR training manikin 100 through a portion of the torso of the manikin defining a manikin opening 106 and be visible externally, as shown in FIGS. 1-5. The cord assembly 210 extends through a portion of the manikin defining a manikin opening 106 from a connector member 218 at a proximal cord assembly end 212 (described below) electrically connected to the base member 220 of the lighted rate monitor assembly 200 (described below) to a distal cord assembly end 214 which can comprise a light member 216, such as a light bulb, light emitting diode (LED), or other lightable member that can be activated to be a visually perceptible signal to a user of the CPR training manikin 100. FIG. 2 is a top view of the CPR training manikin 100. FIG. 3 is a top view of the CPR training manikin. FIG. 4 is a right side elevation view of the CPR training manikin 100. FIG. 5 is a bottom, e.g., back, view of the CPR training manikin 100 showing an example placement of the base member 220 of the lighted rate monitor assembly 200. The base member 220 can fit into, be attached to, or otherwise joined to the manikin body in a fixed position. In an embodiment, the base member 220 fits into complementary molded features of the CPR training manikin 100. In general, the CPR training manikin 100 can have any of various molded features such as ribs 108 for structural support and strength, hinges 110 for hinged movement of various portions, and other features.

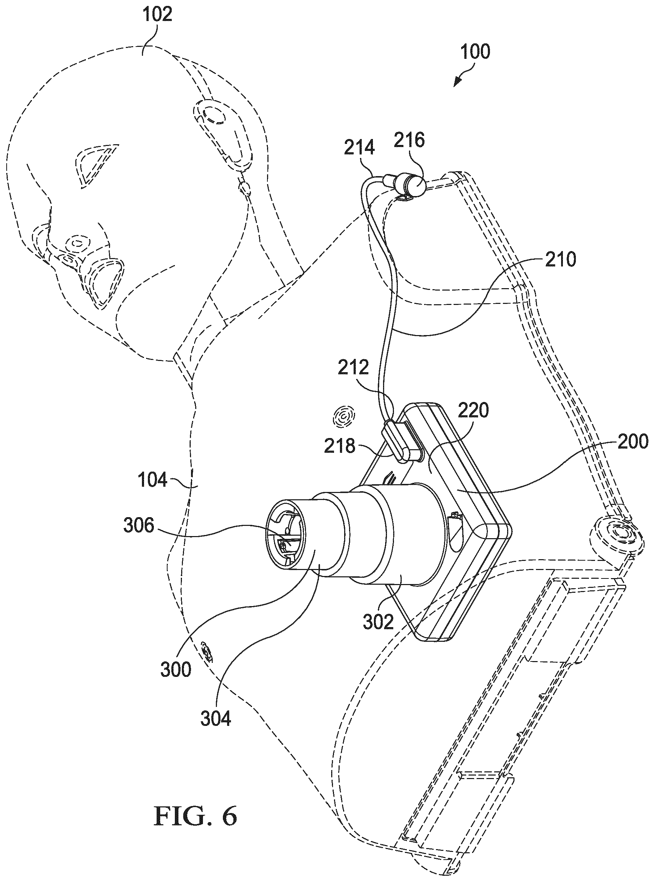

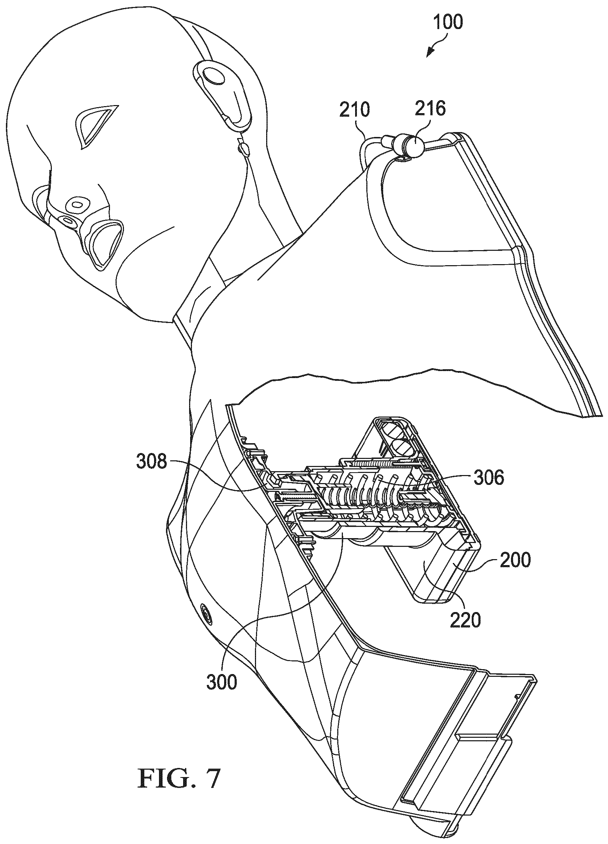

Referring now to FIG. 6, there is shown a lighted rate monitor assembly 200 of the present disclosure. In the illustrated embodiment, the lighted rate monitor assembly 200 is shown with the base member 220 internally disposed generally centrally to the chest 104 portion of the CPR training manikin 100. The lighted rate monitor assembly 200 is operatively connected to a chest compression assembly 300 of the CPR training manikin 100, which can be considered a piston assembly. The chest compression assembly 300 can be the piston assembly that has disposed therein one or more springs which can be compressed by the user being trained in CPR training on the CPR training manikin 100. In an embodiment, an existing piston assembly in an existing manikin can be replaced by the lighted rate monitor assembly 200 of the present disclosure, which includes the chest compression assembly 300. Compressions can be electrically detected and analyzed, processed, or otherwise used in feedback to the user via the lighted rate monitor assembly 200, which can provide feedback via the light member 216, which can be a single LED. Thus, the lighted rate monitor assembly 200 can provide for a relatively low cost remote visual feedback mechanism or module to a cardiopulmonary resuscitation manikin training device. In an embodiment, the lighted rate monitor assembly 200 can be added to an existing CPR training manikin as an aftermarket add-on. In the illustrated embodiment, a remote visual feedback mechanism uses a single LED that is electrically connected to a piston or other compression assembly of the CPR manikin training device. In an embodiment, the chest compression assembly 300 is provided to support and resist chest compressions performed by a user or trainee. The chest compression assembly can be engaged with a chest plate 308 (shown in FIG. 7) of a torso body of a CPR training manikin and can use a spring to provide a predetermined amount of total pressure resistance during compressions. The chest compression assembly can have an outer sleeve 302, one or more telescoping inner sleeves 304, a spring 306 (shown in FIG. 7), and a cap (not shown) which can secure the chest compression assembly 300 components in position.

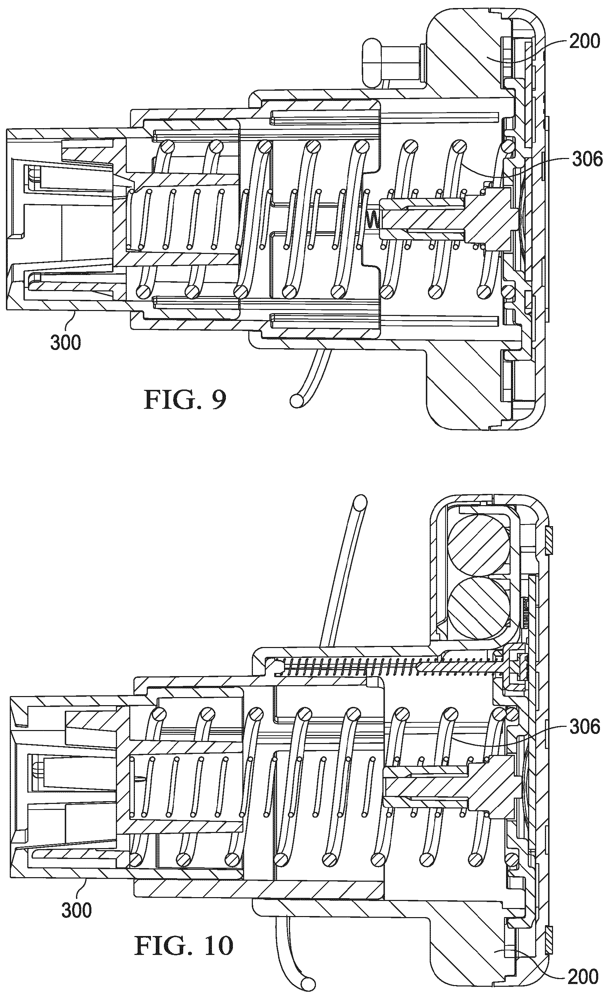

Referring now to FIGS. 9 and 10, there is shown two cross-sectional representations of example chest compression assembly 300 and the base member 220 of the lighted rate monitor assembly 200. As described more fully below, the chest compression assembly 300, or a portion thereof, can be electrically connected to the base member 220, such as via a printed circuit board, such that upon compression of the chest compression assembly 300 a predetermined sufficient distance, an electrical connection is made. The electrical connection can be utilized in providing feedback to the user, such as via the light member 216 which can light with each proper compression. In an embodiment, the light member can light in colors signifying predetermined compression conditions, such as less than ideal compression, proper compression, and greater than proper compression. In an embodiment, the light member can be lighted to signify a predetermined number of sequential, proper chest compressions. Thus, the light member, e.g., LED of the lighted rate monitor assembly 200 can illuminate in predetermined and desired color(s) or predetermined and desired pattern(s) to monitor and report when the proper compression rate or rate and/or compression depth is achieved on the interconnected chest compression assembly by the student. Additional features which may be monitored and reported by the rate monitor assembly include hand placement, speed and/or volume of ventilations, and depth and speed of recoil following compressions. While a single multicolored LED is preferred, where additional reporting features require it, multiple LEDs may be provided to communicate using combinations of colors and/or patterns. The rate monitor assembly includes a cord assembly with the LED being located on the extreme end of the interconnected cord assembly to provide a large viewing angle. The rate monitor cord assembly can be plugged into a piston or other compression assembly, and then extended out and away from the torso of the manikin so that it is visible to both the student and the instructor during a training scenario. Alternatively, a clip device may be used with the LED to secure the LED to the manikin training device during a training session.

The rate monitor assembly is not directional nor does it need to be oriented in a certain direction, as it is viewed from any angle during the training session when extended from the torso and positioned above or around the shoulder area of the torso. When training is complete, the durable cord assembly can remain attached to the piston assembly and stored with or within the piston assembly, or it can be completely detached and stored separately.

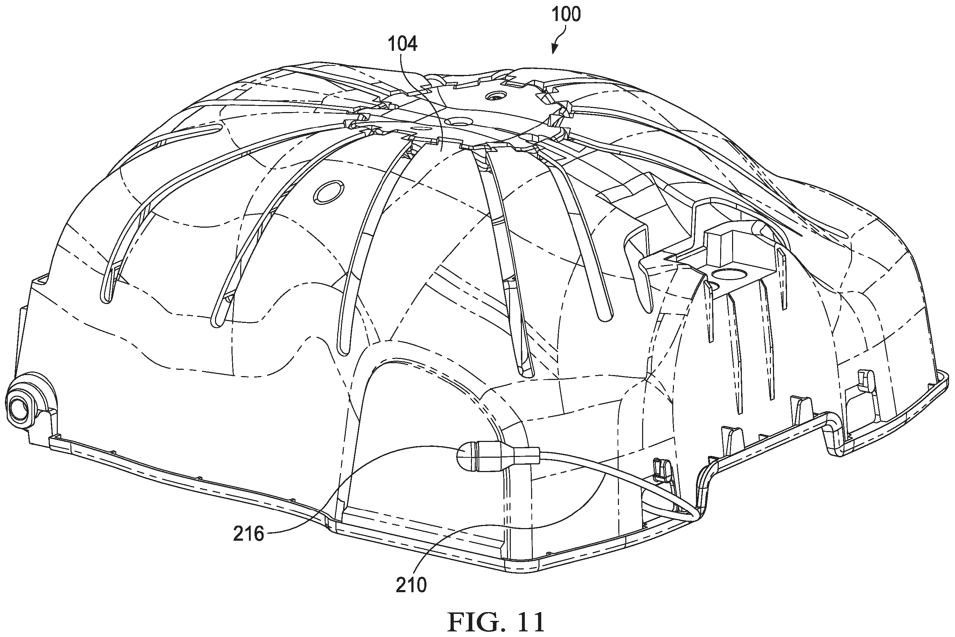

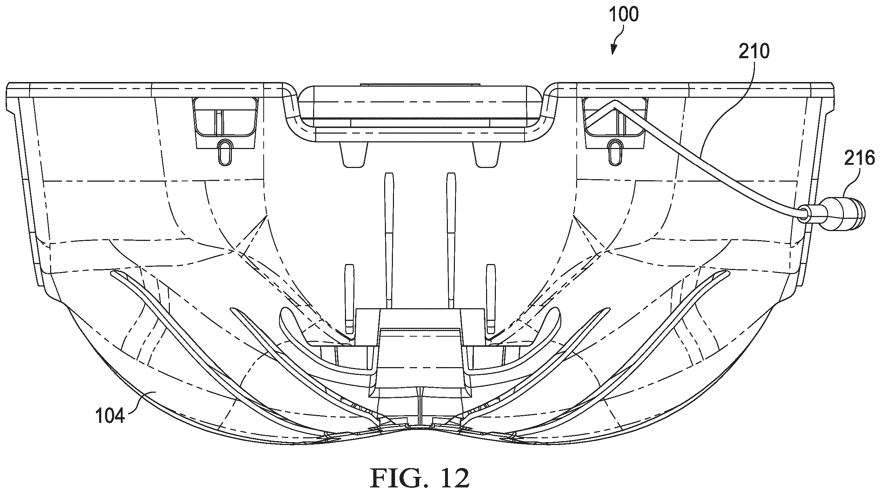

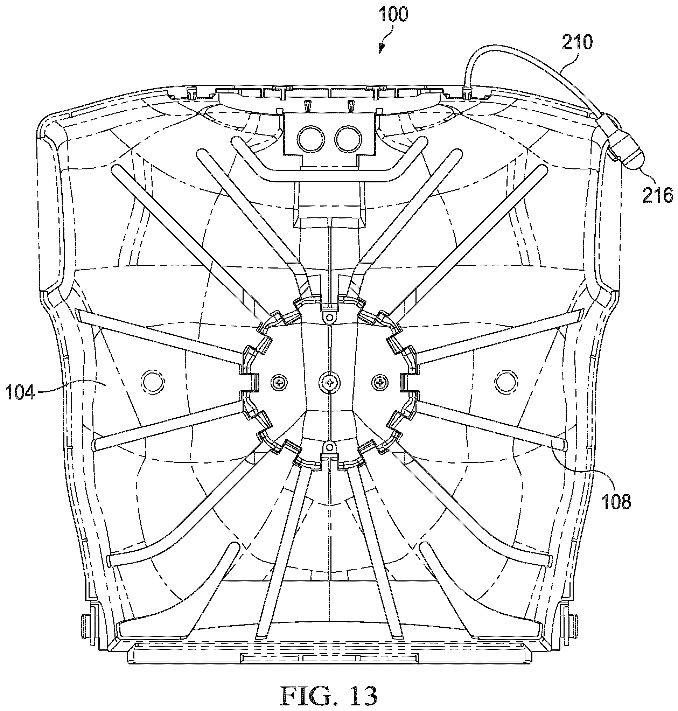

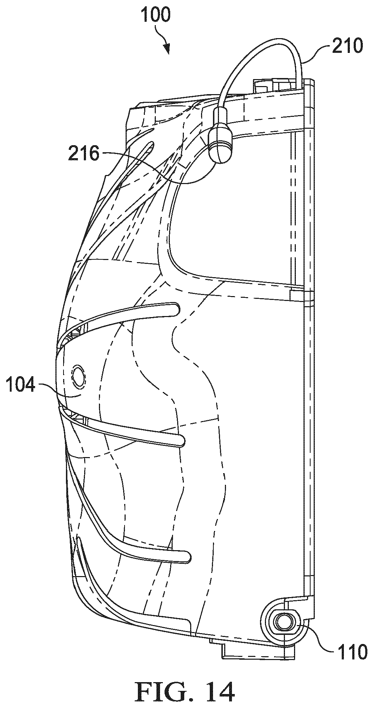

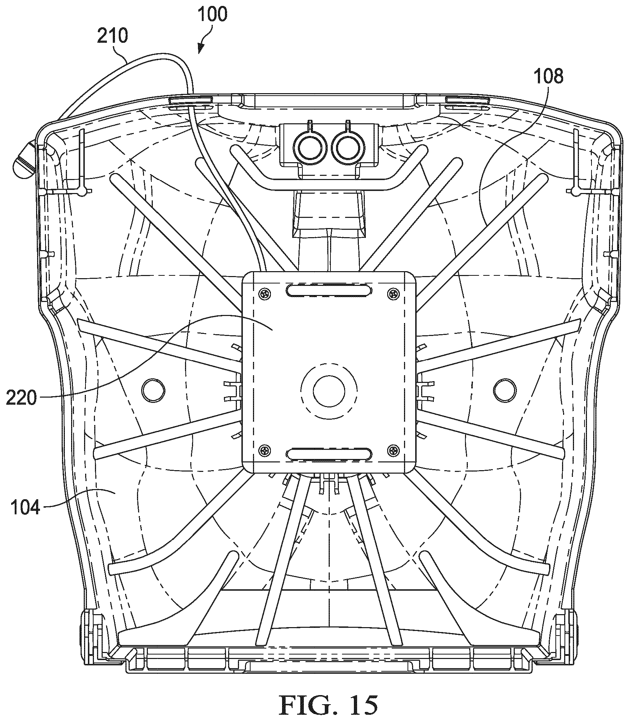

Referring now to FIGS. 11-16, there are shown various views of portion of torso of a CPR training manikin 100, including the chest 104 in which the outer skin layer of the CPR training manikin 100 is removed, and a portion of the lighted rate monitor assembly 200, namely, the cord assembly 210, is illustrated. FIG. 11 shows a perspective view torso of a CPR training manikin 100, including the chest 104 in which the outer skin layer of the CPR training manikin 100 is removed, and a portion of the lighted rate monitor assembly 200, namely, the cord assembly 210. FIG. 12 shows a top end view of the CPR training manikin torso shown in FIG. 11. FIG. 13 shows a top view of the CPR training manikin torso shown in FIG. 11. FIG. 14 shows a right side view of the CPR training manikin torso shown in FIG. 11. FIG. 15 shows a bottom view of the CPR training manikin torso shown in FIG. 11.

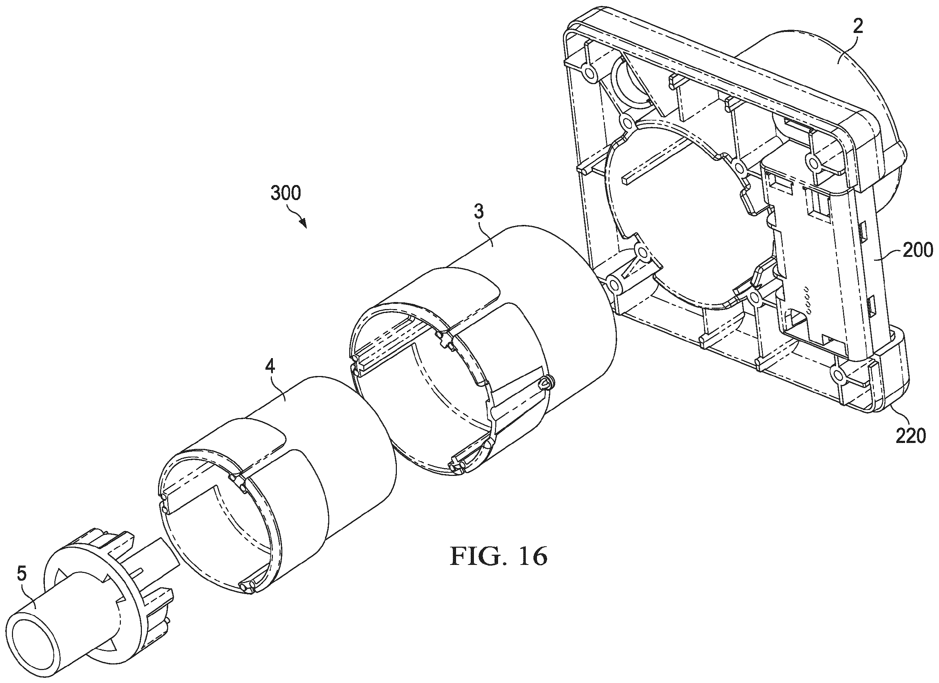

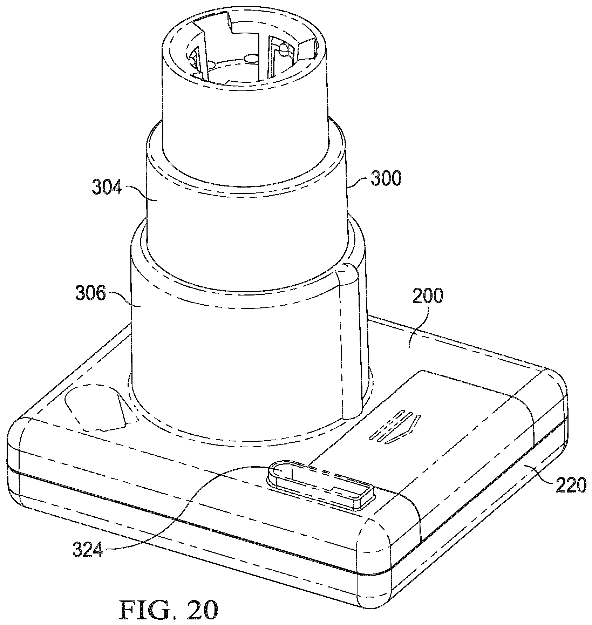

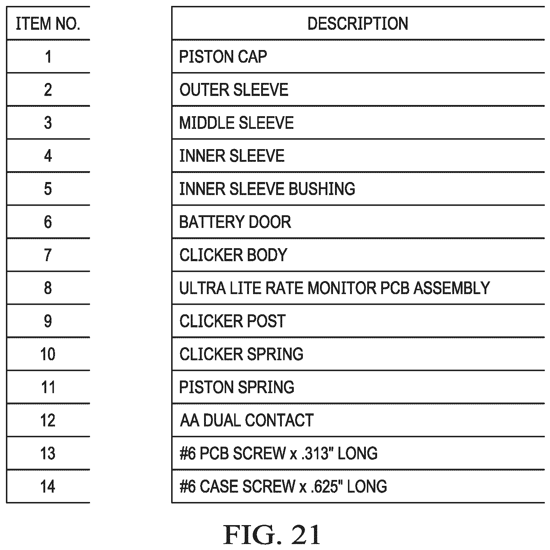

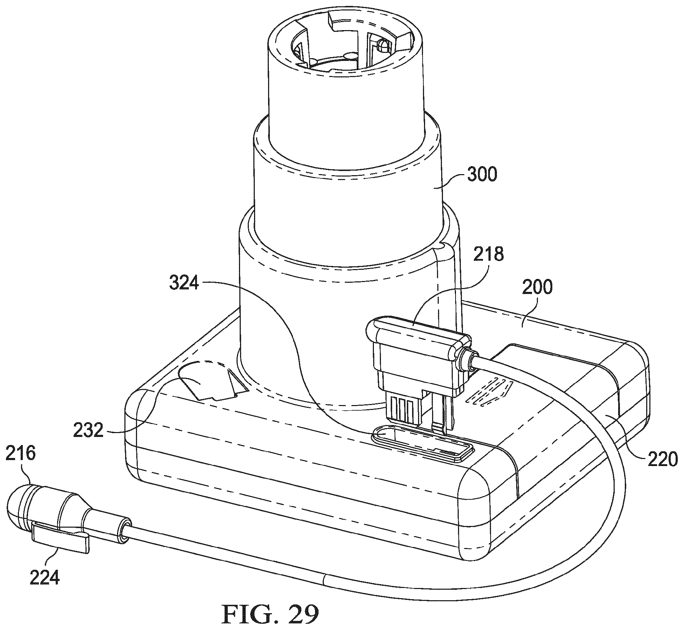

Referring now to FIGS. 16-20, the lighted rate monitor assembly is illustrated with parts numbered 1-14 to correspond to the bill of materials shown in FIG. 21. That is, in addition to the numbering provided in the description herein, certain components are numbered particularly as being keyed to the bill of materials of FIG. 21. FIGS. 16-20 shows a representative lighted rate monitor assembly in various stages of assembly, with a final assembly shown in FIG. 20. Additional depictions of a lighted rate monitor assembly 200 with an associated cord assembly 210 are shown in FIGS. 29-39, below. The lighted rate monitor assembly 200 may be provided in connection with a CPR manikin piston or chest compression assembly 300 mechanism, including an electronic printed circuit board assembly (PCBA) 320 which is able to read and calculate inputs from various sensors, switches or input devices within the chest compression assembly 300, as well as provide a battery compartment 322 for housing and supplying power to the lighted rate monitor assembly. Alternatively, any sensors, switches or electrical connections may be housed within the piston or chest compression assembly 300 mechanism, and the PCBA 320 and associated memory may be formed as part of the cord assembly 210, where data output is received from the sensors and switches and calculations are made prior to reporting. The sensors or input devices preferably detect at least the rate and depth of compressions performed on the compression assembly, but may likewise provide visual and/or audio signals of use and programming aspects of the rate monitor assembly. As previously discussed, additional performance detection of hand placement, speed and/or volume of ventilations, and depth and speed of recoil may also be detected, monitored and reported.

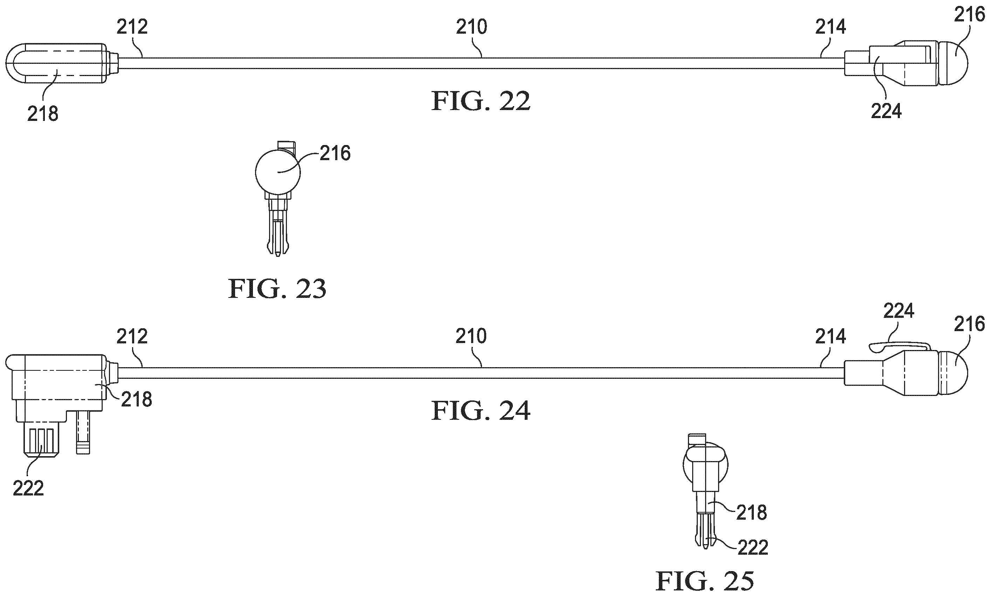

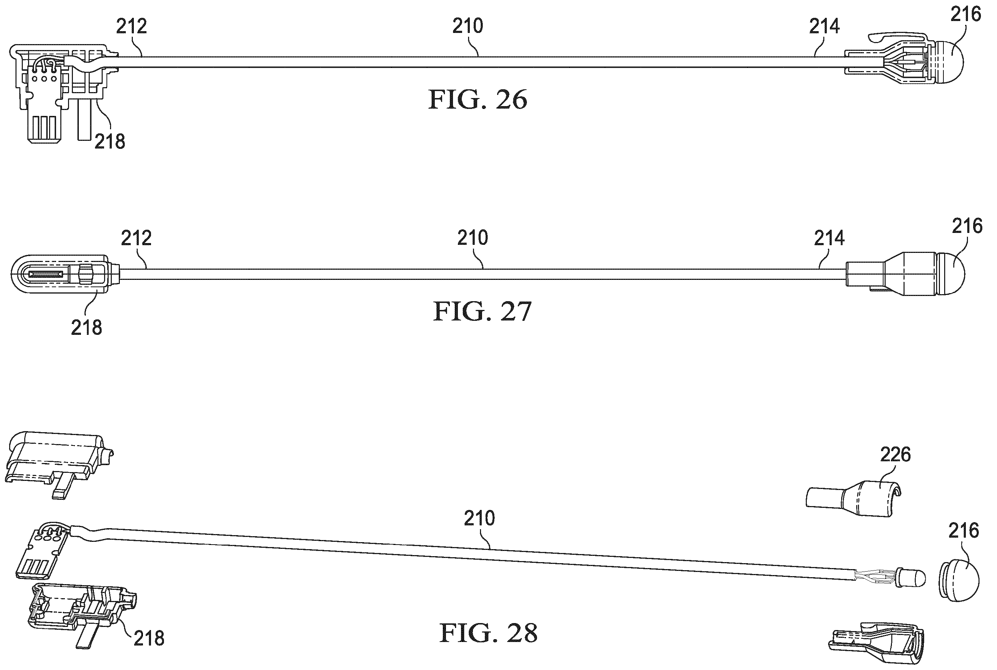

Referring now to FIGS. 22-28 there is shown depictions of a representative cord assembly 210. The cord assembly 210 can have a connector member 218 joined to a proximal cord assembly end 212. The connector member 218 can be configured with electrical contacts 222 to engage and operationally connect the light member 216 to the PCBA 320 via a connector port 324 in the base member 220. The cord assembly 210 can have a light member 216 be electrically operationally configuration at a distal cord assembly end 214 of the cord assembly 210. A placement clip 224 can be disposed at or near the distal cord assembly end 214, and can be used to clip the light in a user-visible position during operation of the CPR training manikin. Cross-sectional and exploded depictions of the representative cord assembly of FIGS. 22-25 are shown in FIGS. 26-28.

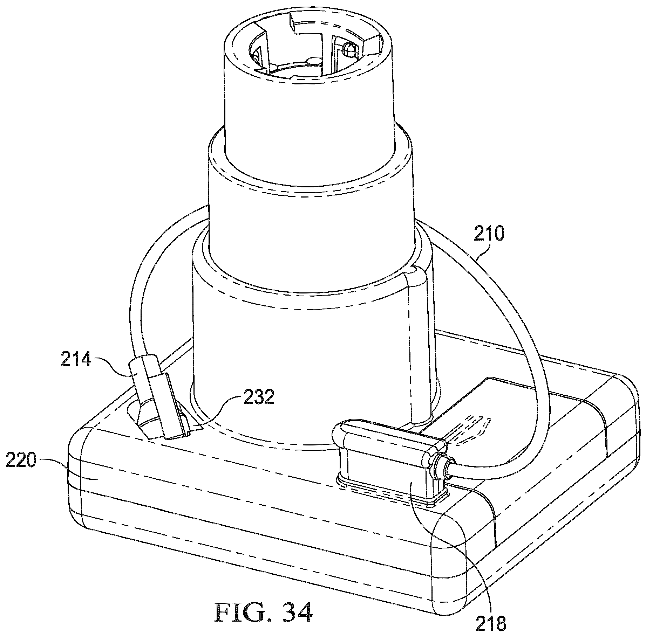

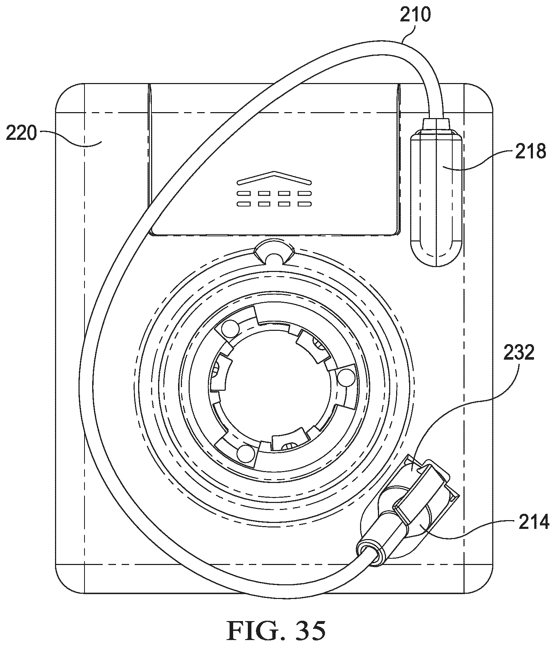

Referring now to FIGS. 29-39 there is shown various views of a lighted rate monitor assembly 200, including showing the various positions and routings of a cord assembly 210. Various features are illustrated. For example, as illustrated in FIGS. 34 and 35, the distal cord assembly end 214 and/or the light member 216 can fit into a pocket 232 of the base member 220 for storage.

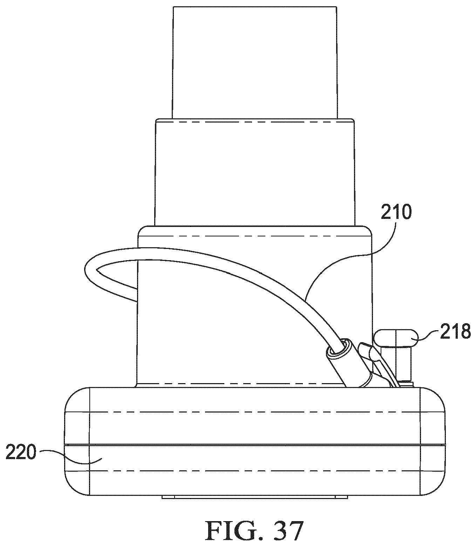

FIG. 37 illustrates a schematic showing an example embodiment of electronic components and operations of the lighted rate monitor assembly 200.

To use the lighted rate monitor assembly 200, the cord assembly 210 is plugged into the base member 220, which can also be considered as the piston assembly, i.e., chest compression member, and electrically connected to the PCBA 320 to receive output signals from the PCBA 320. The cord assembly 210 has a length that is sufficient to extend from the piston assembly, under the manikin or torso assembly, and/or out an manikin opening 106 along the perimeter of the manikin or torso, preferably to a position on the floor or work surface supporting the manikin in the proximity of the shoulder area of the manikin torso. The cord assembly 210 includes a connector member 218, i.e., a plug end, that would be in electrical communication with an inlet feature 230 on one of the base member and the piston assembly, e.g., the chest compression assembly 300. The LED is on an opposite end of the cord assembly, which can flash one or various colors and/or in various desired patterns to show real time feedback of the CPR compression rate and depth being administered by a student on the CPR training manikin 100. The LED is housed or encapsulated in plastic or vinyl, and also preferably provides a lens covering the LED, which not only insulates the electrical connections and enhances the light emanating from the LED through the lens, but also provides protection for the LED from damage during transit or use. The lens covering the LED or the housing for the LED may include a clip feature for securing attachment of the LED to a desired location during use of the rate monitor assembly.

In a second embodiment of the cord assembly, a bare LED bulb is used, thus eliminating the lens feature that helps with the distribution of the light emanating from the LED, but increases cost.

In a third embodiment of the rate monitor assembly, the PCB assembly consists of multiple surface mount LEDs arranged around the perimeter of the PCB to illuminate the perimeter and areas surrounding the assembly. The fixed LEDs would be located adjacent to translucent material formed as a portion of the housing, or manikin torso or head, that would act as a lens to enable improved light transmission from the fixed LEDs through any translucent or transparent portions.

In an embodiment, the cord assembly 210 may be either permanently attached via flexible cord, or may be removable using a mating outlet on the piston assembly which receives the plug on the flexible cord assembly. Visual feedback provided via a multicolored LED enables the use of various colors or flashing of the LED in various patterns to communicate the status of the device.

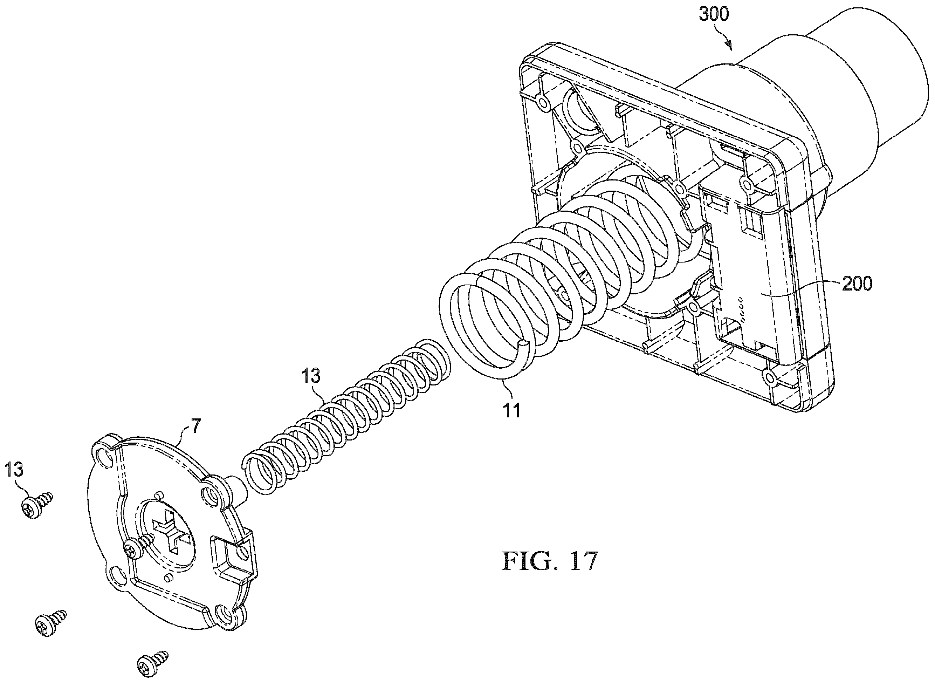

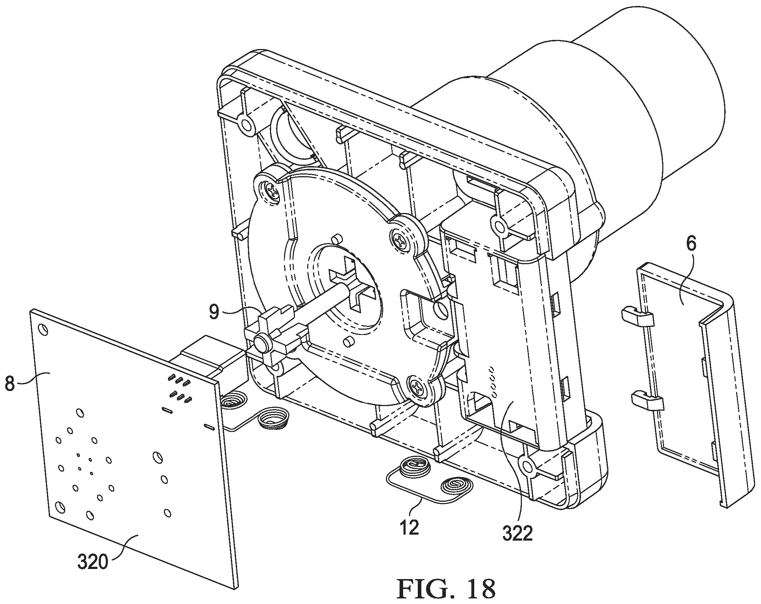

The lighted rate monitor assembly has been described with reference to the accompanying drawings, in which some, but not all embodiments of the assembly have been shown. Indeed, this assembly may be embodied in many different forms and should not be construed as limited to the embodiments set forth herein; rather, these embodiments are provided so that this disclosure will satisfy applicable legal requirement. As previously described, the lighted rate monitor assembly is provided in connection with a compression assembly for a CPR manikin training device to provide a low cost remote visual feedback mechanism for a CPR training manikin. To detect the appropriate compression depth performed by a user, an audible sound clicker is provided, components of which are shown in Figures 17 and 18.

To detect or monitor and report to a user their rate of compressions performed on the CPR training manikin, sensors on the PCB assembly signal a single multi-colored LED electrically connected to the piston or other compression assembly of the CPR manikin training device, to report the rate of compressions per minute ("CPM") by having the LED display the solid or flashing colors described, by way of non-limiting example, below:
CPM less than 100 - Red (Solid)
CPM in a range greater than or equal to 100 and less than or equal to 120 - Green (Solid)
CPM greater than 120 - Red - (Flash 3x per second)

It is understood that an additional electronic modules may additionally be provided to interface with the lighted rate monitory assembly. For example, using a Smartphone application programmed to interface with the PCB assembly via Bluetooth technology, a Bluetooth transmitter may be used within the compression assembly to transmit rates of compression to the Smartphone application. Use of such an application may be used with cord assembly or may enable the user to substitute the application running on a Smartphone for the lighted cord assembly and LED.

Although the lighted rate monitor assembly device of the present application has been shown and described in detail sufficient for one of ordinary skill in the art to practice the device, it should be understood that various changes, substitutions and alterations may be made without departing from the spirit or scope of the device as defined in the attached claims. Moreover, the scope of the present device is not intended to be limited to the specific embodiments described here, which are provided by way of example. As one of ordinary skill in the art will readily appreciate from the disclosure of the present device and its embodiments, other components and means presently existing or later to be developed that perform substantially the same function to achieve substantially the same result as those of the corresponding embodiments described here, may be utilized according to the present application. Accordingly, the appended claims are intended to include within their scope such other components or means.

## Claims

1. A CPR training manikin (100) having size and shape of a torso area of a human, the CPR training manikin (100) comprising:
a lighted rate monitor assembly (200) including:
a base member (220), the base member (220) including an electronic control board; and
a chest compression assembly (300) joined to the base member, the chest compression assembly (300) comprising input devices electrically connected to the electronic control board;
**characterized by**:
a cord assembly (210) comprising a plug member (218) at a proximal cord assembly end (212) for removable electrical connection with the electronic control board and a light member (216), wherein the cord assembly (210) is configured such that the light member (216) is movable relative to the chest compression assembly (300) in various positions.

2. The CPR training manikin of Claim 1, wherein the light member (216) is positioned at a distal cord assembly end (214).

3. The CPR training manikin of any preceding claim, wherein the light member (216) comprises a single LED.

4. The CPR training manikin of claim 1 or 2, wherein the light member (216) comprises multiple LEDs.

5. The CPR training manikin of any preceding claim, wherein the light member (216) emits one or more colors.

6. The CPR training manikin of any preceding claim, wherein the light member (216) illuminates one or more patterns.

7. The CPR training manikin of any preceding claim, wherein the chest compression assembly comprises a telescoping sleeve (304).

8. The CPR training manikin of any preceding claim, wherein the plug member engages with an outlet defined in the base member.

9. The CPR training manikin of any preceding claim, wherein the light member (216) is housed within a light housing having a lens portion covering the light.

10. The CPR training manikin of any preceding claim, further comprising a placement clip (224).

11. The CPR training manikin of any preceding claim, wherein the light member (216) mounted on the electronic control board is configured to illuminate in a predetermined color or a predetermined and desired pattern to monitor and report when a proper compression rate or compression depth is achieved on the chest compression assembly.

12. The CPR training manikin of any preceding claim, wherein the cord assembly (210) extends from the plug member (218) disposed in the interior of the manikin (100) through a manikin opening (106) to the light member (216) disposed exteriorly to the manikin (100).

13. The CPR training manikin of any preceding claim, wherein the chest compression assembly (300) includes a mating outlet that is configured to receive the plug member (218).

14. The CPR training manikin of any preceding claim, wherein the light member (216) is a multicolored LED and configured to provide visual feedback.

15. The CPR training manikin of any preceding claim, wherein the compression chest assembly (300) comprises one or more sensors, switches, or input devices and connected to the electronic control board.
